**Europäisches Patentamt**

**European Patent Office**

**Office européen des brevets**

(19)

(11) Veröffentlichungsnummer: **0 124 101**
**A1**

# (12) EUROPÄISCHE PATENTANMELDUNG

(21) Anmeldenummer: **84104739.2**

(22) Anmeldetag: **27.04.84**

(51) Int. Cl.³: **B 31 B 1/64,** B 29 C 27/02

(30) Priorität: **02.05.83 DE 8312907 U**

(43) Veröffentlichungstag der Anmeldung: **07.11.84**
**Patentblatt 84/45**

(84) Benannte Vertragsstaaten: **AT BE CH DE FR GB IT LI LU NL SE**

(71) Anmelder: **UNILEVER NV, Burgemeester s'Jacobplein 1 P.O. Box 760, NL-3000 DK Rotterdam (NL)**

(84) Benannte Vertragsstaaten: **AT BE CH DE FR GB IT LI LU NL SE**

(71) Anmelder: **UNILEVER PLC, Unilever House Blackfriars P O Box 68, London EC4P 4BQ (GB)**

(84) Benannte Vertragsstaaten: **GB**

(72) Erfinder: **Duprée, Bernd, Austrasse 10, D-8550 Forchheim (DE)**

(74) Vertreter: **Hutzelmann, Gerhard et al, Ulmer Strasse 18 Postfach 26 80, D-8960 Kempten/Allgäu (DE)**

(54) **Schweissnaht.**

(57) Großvolumige Beutel aus thermoplastischen Kunststoff-folien (1, 2) werden durch Schweißen übereinanderliegender Bahnen gebildet. Zur Verstärkung dieser Schweißnähte (3) werden zusätzliche Stege (4) geschweißt, die quer zur Naht verlaufen. Die Abstände der Stege und ihre Richtung in bezug auf die Längsnaht können den jeweiligen Erfordernissen ange-paßt werden.

EP 0 124 101 A1

0124101

U 2360(K)                                    Unilever N.V.

– 1 –

Schweißnaht

Die Erfindung bezieht sich auf eine Längsschweißnaht an
bahnförmigen Gebilden aus thermoplastischem Kunststoff,
insbesondere großvolumigen Beuteln, die durch Schweißen
übereinanderliegender Bahnen erzeugt werden.

Bei der Herstellung von insbesondere bedruckten, großvolumigen Beuteln aus thermoplastischen Kunststoffolien wird die
anwendbare Folienbreite durch die Breite der Druckmaschine
begrenzt. Um in diesem Falle die geforderte Beutelgröße
erreichen zu können, müssen zusätzliche Kunststoffbänder in
Längsrichtung außen an die bedruckten Folienbahnen angeschweißt werden. Dies kann z. B. mittels beheizter Schweißräder durchgeführt werden, die eine z. B. etwa 3 bis 4 mm
breite Längsnaht erzeugen.

Es trat das Problem auf, daß bei großvolumigen Beuteln,
deren Inhalt ein entsprechend großes Gewicht aufweist, die
Festigkeit dieser oben beschriebenen Längsnähte nicht ausreichend ist, um die durch das Gewicht des Inhaltes des
Beutels auftretenden Spannungen aufzunehmen.

Der Erfindung liegt die Aufgabe zugrunde, eine Schweißnaht
an bahnförmigen Gebilden aus thermoplastischem Kunststoff,
insbesondere großvolumigen Beuteln, die durch Schweißen
übereinanderliegender Bahnen erzeugt werden, zu schaffen,
welche auch die bei relativ großem Gewicht des gefüllten Beutels auftretenden Spannungen gut aufnehmen kann, ohne z.B. aufgerissen zu werden. Dabei soll diese Schweißnaht im Herstellungsverfahren des Beutels relativ leicht zu realisieren sein, und aus wirtschaftlichen Erwägungen soll die Breite der überlappenden Ränder der Bahnen möglichst gering sein.

Diese Aufgabe wird erfindungsgemäß dadurch gelöst, daß die Längsschweißnaht zusätzliche geschweißte Stege in Querrichtung zur Naht aufweist. Durch diese in Querrichtung verlaufenden Stege werden auch große, durch die Belastung des Beutels mit seinem Inhalt hervorgerufene Kräfte aufgefangen.

Die Abstände zwischen den Stegen können dabei gleich oder verschieden sein.

Bei einer vorteilhaften Ausgestaltung der Erfindung sind die Stege zu der Längsschweißnaht geneigt.

Auch ist es möglich, die Stege versetzt zu der Längsschweißnaht anzuordnen.

In der Zeichnung sind zwei Ausführungsbeispiele der Erfindung schematisch dargestellt. Es zeigen:

Fig. 1    zwei Folienbahnen, welche mittels einer Längsschweißnaht mit quer dazu verlaufenden Stegen verbunden sind und

Fig. 2    zwei Folienbahnen, welche mittels einer anderen Ausführungsform der Längsschweißnaht miteinander verbunden sind.

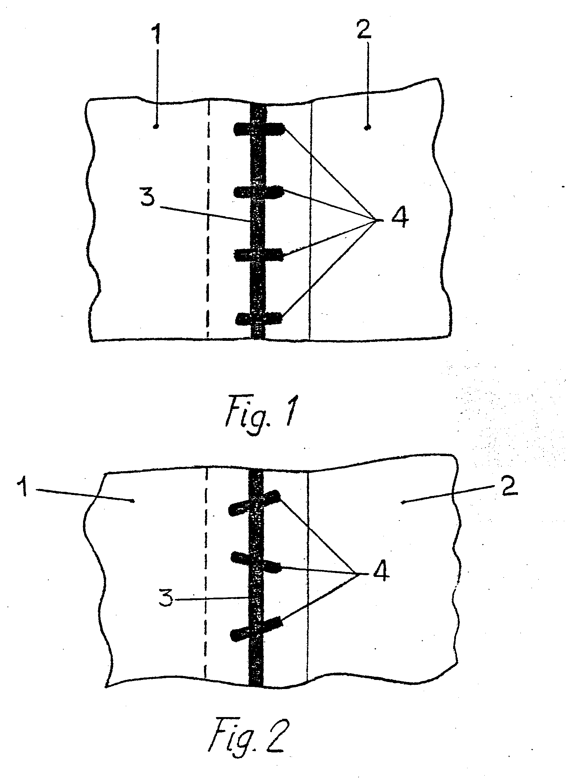

Gleiche Bezugsziffern in den verschiedenen Figuren beziehen sich auf gleiche Teile. Wie aus Fig. 1 ersichtlich ist, sind zwei aufeinanderliegende Bahnen 1 und 2 mittels einer Längs-

- 3 -    0124101

schweißnaht 3 miteinander verbunden. Die zusätzlich geschweißten Stege 4 in Querrichtung zur Schweißnaht 3 verstärken diese Naht.

In Fig. 2 ist schematisch eine Ausführungsform gezeigt, in der die Stege 4 etwas zu der Längsschweißnaht 3 geneigt sind. Dabei sind die Stege 4 in wechselnder Richtung geneigt, aber abhängig von der Kräfte- und Spannungsverteilung in der zu verstärkenden Schweißnaht 3 können die Stege 4 auch alle in gleicher Richtung zu der Schweißnaht 3 geneigt sein, oder können alternierend mehrere Stege 4 in einer Richtung und gleiche oder verschiedene Anzahl der Stege 4 in einer anderen Richtung zu der zu verstärkenden Schweißnaht 3 geneigt sein. Diese Möglichkeiten sind durch entsprechende Ausführung des Schweißwerkzeuges leicht zu realisieren.

U 2360(K)                                    Unilever N.V.

## Patentansprüche

1. Längsschweißnaht an bahnförmigen Gebilden aus thermoplastischem Kunststoff, insbesondere großvolumigen
Beuteln, die durch Schweißen übereinanderliegender
Bahnen erzeugt werden, **dadurch gekennzeichnet,** daß die
Längsschweißnaht (3) zusätzlich geschweißte Stege (4)
in Querrichtung zur Naht aufweist.

2. Längsschweißnaht nach Anspruch 1, **dadurch gekennzeichnet,** daß die Abstände zwischen den Stegen (4) gleich
oder verschieden sind.

3. Längsschweißnaht nach Anspruch 1 oder 2, **dadurch gekennzeichnet,** daß die Stege (4) zu der Längsschweißnaht
(3) geneigt sind.

4. Längsschweißnaht nach Anspruch 3, **dadurch gekennzeichnet,** daß die Stege (4) in verschiedener Richtung zu der
Längsschweißnaht (3) geneigt sind.

5. Längsschweißnaht nach einem der Ansprüche 1 bis 4,
**dadurch gekennzeichnet,** daß die Stege (4) versetzt zu
der Längsschweißnaht (3) angeordnet sind.

Fig. 1

Fig. 2

# EUROPÄISCHER RECHERCHENBERICHT

| | EINSCHLÄGIGE DOKUMENTE | | EP 84104739.2 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 2 999 042 (MEISTER) <br> * Fig. 2; Spalte 2, Zeilen 26-44 * | 1-3 | B 31 B 1/64 <br> B 29 C 27/02 |
| A | | 4,5 | |
| A | DE - B - 1 436 832 (PNEUMATIC SALE CORP.) <br> * Fig. 1; Anspruch 1 * | 1 | |
| A | DE - A - 2 158 565 (BRANSON) | | |
| A | US - A - 3 669 802 (FELDKAMPER) ---- | | |

| RECHERCHIERTE SACHGEBIETE (Int. Cl. ³) |
|---|
| B 31 B <br> B 65 H 19/00 <br> B 65 H 21/00 <br> B 29 C 27/00 |

Der vorliegende Recherchenbericht wurde für alle Patentansprüche erstellt.

| Recherchenort | Abschlußdatum der Recherche | Prüfer |
|---|---|---|
| WIEN | 25-07-1984 | HABART |